# EUROPÄISCHE PATENTANMELDUNG

(11) **EP 3 952 024 A1**
(43) Veröffentlichungstag der Anmeldung: **09.02.2022**
(21) Anmeldenummer: 21189617.0
(22) Anmeldetag: 04.08.2021
(51) Int. Cl.: H01R 4/10, H01R 4/06, H01R 4/62, H02G 5/00, H01B 5/00

(54) **STROMSCHIENE FÜR EIN KRAFTFAHRZEUG UND VERFAHREN ZUM HERSTELLEN EINER STROMSCHIENE**

(30) Priorität: 06.08.2020 DE 102020120778
(71) Anmelder: Lisa Dräxlmaier GmbH, 84137 Vilsbiburg (DE)
(72) Erfinder: Neumayer, Johannes, 84539 Zangberg (DE)

(57) **Zusammenfassung**

Die Erfindung betrifft eine Stromschiene (10) für ein Kraftfahrzeug, umfassend ein Aluminiumblech (12), das mit einem Kupferelement und einem Kupferblech (16) verbunden ist, wobei zumindest in einem Befestigungsbereich (18) der Stromschiene (10) das Aluminiumblech (12) bezogen auf die Hochrichtung (z) der Stromschiene (10) zwischen dem Kupferelement und dem Kupferblech (16) angeordnet und zumindest in einer quer zur Hochrichtung (z) verlaufenden Richtung formschlüssig mittels des Kupferelements und/oder des Kupferblechs (16) fixiert ist. Die Erfindung betrifft des Weiteren ein Verfahren zum Herstellen einer Stromschiene (10) für ein Kraftfahrzeug.

## Beschreibung

### Technisches Gebiet

Die vorliegende Erfindung betrifft eine Stromschiene für ein Kraftfahrzeug und ein Verfahren zum Herstellen einer derartigen Stromschiene.

### Stand der Technik

Es ist an sich bekannt, Stromschienen in Kraftfahrzeugen einzusetzen, um verschiedenste Komponenten beziehungsweise Baugruppen stromleitend miteinander zu verbinden. Insbesondere im Automobilbereich ist es üblicherweise wichtig und erstrebenswert, Gewichteinsparungen zu erzielen. Darüber hinaus spielen auch die Kosten üblicherweise eine große Rolle.

### Beschreibung der Erfindung

Es ist daher die Aufgabe der vorliegenden Erfindung, eine Stromschiene bereitzustellen, die besonders gute stromleitende Eigenschaften bei geringem Gewicht und geringen Kosten aufweist.

Diese Aufgabe wird durch eine Stromschiene für ein Kraftfahrzeug sowie durch ein Verfahren zum Herstellen einer derartigen Stromschiene mit den Merkmalen der unabhängigen Ansprüche gelöst. Weitere mögliche Ausgestaltungen der Erfindung sind in den abhängigen Ansprüchen, der Beschreibung und den Figuren angegeben.

Die erfindungsgemäße Stromschiene für ein Kraftfahrzeug umfasst ein Aluminiumblech, das mit einem Kupferelement und einem Kupferblech verbunden ist, wobei zumindest in einem Befestigungsbereich der Stromschiene das Aluminiumblech bezogen auf die Hochrichtung der Stromschiene zwischen dem Kupferelement und dem Kupferblech angeordnet und zumindest in einer quer zur Hochrichtung verlaufenden Richtung formschlüssig mittels des Kupferelements und/oder des Kupferblechs fixiert ist. Die erfindungsgemäße Stromschiene kann beispielsweise bei Stromverteilern, Zellverbindern oder auch beispielsweise bei Batteriesteuergeräten eingesetzt werden.

Der Erfindung liegt insbesondere die Erkenntnis zugrunde, dass die elektrische Leitfähigkeit von Aluminium bezogen auf seine Dichte der Leitfähigkeit von Kupfer überlegen ist. Des Weiteren liegt der Erfindung die Erkenntnis zugrunde, dass eine große Herausforderung beim Einsatz von Aluminium im Zusammenhang mit Stromschienen darin liegt, die nichtleitende Oxidschicht des Aluminiums durchbrechen zu müssen, um eine elektrisch leitfähige Kontaktierung herstellen zu können. Zudem muss insbesondere unter bei Kraftfahrzeugen üblichen Einsatzbedingungen die Korrosion bei Aluminium verhindert werden. Des Weiteren muss insbesondere auch das Kriechen des Aluminiums bei vorgespannten mechanischen Verbindungen verhindert werden.

Durch die erfindungsgemäße Lösung, das Aluminiumblech zumindest im Befestigungsbereich der Stromschiene mittels des Kupferelements und/oder des Kupferblechs formschlüssig zu fixieren, kann zuverlässig verhindert werden, dass beim Gebrauch der Stromschiene unter den üblich auftretenden Randbedingungen im Kraftfahrzeug ein Kriechen des Aluminiumblechs stattfindet. Zumindest bereichsweise weist die Stromschiene also einen sandwichartigen Aufbau auf, der das Kupferelement, das Kupferblech und das dazwischen angeordnete Aluminiumblech aufweist. Das üblicherweise vorhandene Kriechverhalten des Aluminiumblechs wird also durch eine Einfassung mittels des Kupferelements und/oder des Kupferblechs verhindert. Dadurch kann eine mechanische Vorspannung und damit eine stromtragende Eigenschaft der Stromschiene besonders gut aufrechterhalten werden.

Durch den Einsatz des Aluminiumblechs in der erfindungsgemäßen Stromschiene entsteht ein Kostenvorteil gegenüber Stromschienen, die beispielsweise aus Kupfer hergestellt sind, da Aluminium günstiger als Kupfer ist. Zudem entsteht bei der erfindungsgemäßen Stromschiene gegenüber Stromschienen, die beispielsweise aus Kupfer hergestellt sind, auch ein Gewichtsvorteil, da die elektrische Leitfähigkeit von Aluminium bezogen auf die Dichte der Leitfähigkeit von Kupfer überlegen ist. Darüber hinaus ist die erfindungsgemäße Stromschiene, die eine Mischverbindung aus Kupfer und Aluminium bildet, insbesondere auch bei Temperaturen größere 100 °C langzeitstabil.

Eine mögliche Ausgestaltung der Erfindung sieht vor, dass das Kupferelement ein Kupferblech ist, wobei das Aluminiumblech im Befestigungsbereich mittels einer Clinchverbindung mit den Kupferblechen verbunden ist. Mit anderen Worten wird die Stromschiene also durch eine Art Dreifachverbindung gebildet, die das Aluminiumblech und die beiden Kupferbleche aufweist, zwischen denen das Aluminiumblech eingeschlossen ist. Dadurch kann eine elektrisch langzeitstabile Verbindung hergestellt werden, sodass die Stromschiene insbesondere auch bei über 100 °C dauerhaft zuverlässig eingesetzt werden kann. Durch diese Anordnung kann das Problem des Kriechens des Aluminiumblechs kompensiert werden, da das Aluminiumblech durch die beiden Kupferbleche oberseitig und unterseitig eingeschlossen wird.

Eine weitere mögliche Ausgestaltung der Erfindung sieht vor, dass das Aluminiumblech und die Kupferbleche im Befestigungsbereich gemeinsam eine Ausbuchtung mit einem im Wesentlichen u-förmigen Querschnitt bilden. Diese Ausbuchtung mit dem im Wesentlichen u-förmigen Querschnitt wird durch die besagte Clinchverbindung gebildet. Das Aluminiumblech wird also im Bereich der Ausbuchtung, also im Befestigungsbereich, durch die u-förmige Ausgestaltung am Kriechen gehindert, da das Aluminiumblech durch die beiden Kupferbleche formschlüssig fixiert wird.

In weiterer möglicher Ausgestaltung der Erfindung ist es vorgesehen, dass die Stromschiene eine Sandwichanordnung ist, die das zwischen den beiden Kupferblechen angeordnete Aluminiumblech aufweist. Über die gesamte Länge beziehungsweise Breite der Stromschiene ist also das Aluminiumblech zwischen den beiden Kupferblechen angeordnet. Insbesondere können die beiden Kupferbleche das Aluminiumblech zwischen sich einschließen.

Eine alternative mögliche Ausgestaltung der Erfindung sieht vor, dass das Kupferelement ein Kupferniet ist, das im Befestigungsbereich das Aluminiumblech durch eine Clinchnietverbindung mit dem Kupferblech fixiert. Der Kupferniet ist also im Befestigungsbereich in das Aluminiumblech hineingedrückt, wodurch sowohl das Aluminiumblech als auch das Kupferblech im Befestigungsbereich in Hochrichtung komprimiert sind und durch den Kupferniet fest miteinander verbunden sind. Insbesondere der Kupferniet sorgt dafür, dass eine besonders hohe Scherzugfestigkeit quer zur Hochrichtung der Stromschiene erzielt werden kann. Insbesondere das Kriechen des Aluminiumblechs kann dadurch zuverlässig verhindert werden.

Eine weitere mögliche Ausgestaltung der Erfindung sieht vor, dass das Aluminiumblech und das Kupferblech im Befestigungsbereich gemeinsam eine Ausbuchtung mit einem im Wesentlichen u-förmigen Querschnitt bilden, in welcher der Kupferniet angeordnet ist. In einer quer zur Hochrichtung der Stromschiene verlaufenden Ebene verhindert also der in der Ausbuchtung angeordnete Kupferniet, dass insbesondere das Aluminiumblech kriechen kann. Dadurch wird eine besonders dauerhaft stabile Verbindung mit der Stromschiene sichergestellt.

Eine alternative mögliche Ausgestaltung der Erfindung sieht vor, dass das Kupferelement ein Kupferstanzkörper ist, der im Befestigungsbereich das Aluminiumblech vollständig und das Kupferblech teilweise durchdringt und dadurch das Aluminiumblech am Kupferblech fixiert. Mit anderen Worten sind der Kupferstanzkörper, das Aluminiumblech und das Kupferblech durch eine Halbhohlstanznietverbindung miteinander verbunden. Auch dadurch ergibt sich eine besonders zuverlässige Fixierung des Aluminiumblechs am Kupferblech, wobei die Kriechneigung des Aluminiumblechs insbesondere durch den Kupferstanzkörper zuverlässig verhindert werden kann, der das Aluminiumblech im Befestigungsbereich vollständig durchdringt und am Kupferblech verankert. Das Aluminiumblech und das Kupferblech können im Befestigungsbereich gemeinsam eine Ausbuchtung mit einem im Wesentlichen u-förmigen Querschnitt bilden, wobei der Kupferstanzkörper in dieser Ausbuchtung angeordnet sein kann. Durch diese u-förmige Ausbuchtung von Aluminiumblech und Kupferblech kann zusätzlich noch das Kupferblech dafür sorgen, die Kriechneigung des Aluminiumblechs quer zur Hochrichtung der Stromschiene zu unterbinden.

Bei dem erfindungsgemäßen Verfahren zum Herstellen einer Stromschiene für ein Kraftfahrzeug wird ein Aluminiumblech mit einem Kupferelement und einem Kupferblech verbunden, wobei zumindest in einem Befestigungsbereich der Stromschiene das Aluminiumblech bezogen auf die Hochrichtung der Stromschiene zwischen dem Kupferelement und dem Kupferblech angeordnet und zumindest in einer quer zur Hochrichtung verlaufenden Richtung formschlüssig mittels des Kupferelements und/oder des Kupferblechs fixiert wird. Mögliche Ausgestaltungen der erfindungsgemäßen Stromschiene sind als mögliche Ausgestaltungen des erfindungsgemäßen Verfahrens und umgekehrt anzusehen, wobei mittels des Verfahrens alle notwendigen Schritte durchgeführt werden können, um die erläuterten Ausführungsformen der erfindungsgemäßen Stromschiene umzusetzen.

Eine mögliche Ausgestaltung des Verfahrens sieht vor, dass das Kupferelement ebenfalls ein Kupferblech ist, wobei das zwischen den beiden Kupferblechen angeordnete Aluminiumblech durch eine nietlose Clinchverbindung im Befestigungsbereich mit den Kupferblechen verbunden wird. Alternativ ist es möglich, dass das Kupferelement ein Kupferniet ist, mittels welchem das Aluminiumblech im Befestigungsbereich durch eine Clinchnietverbindung an dem Kupferblech fixiert wird. Alternativ ist es auch möglich, dass das Kupferelement ein Kupferstanzkörper ist, der im Befestigungsbereich durch Halbhohlstanznieten durch das Aluminiumblech hindurch und in das Kupferblech getrieben wird und dadurch das Aluminiumblech am Kupferblech fixiert wird. Es ist also möglich, das Aluminiumblech zwischen den beiden Kupferblechen konventionell unter Verwendung einer festen Matrize nietlos zu clinchen. Alternativ ist es möglich, das Aluminiumblech mittels des besagten Kupferniets durch Clinchnieten mit dem Kupferblech zu verbinden. Darüber hinaus ist es alternativ möglich, durch Halbhohlstanznieten das Aluminiumblech mit Hilfe des besagten Kupferstanzkörpers am Kupferblech zu fixieren. Alle Verfahrensalternativen haben gemeinsam, dass eine Dreifachverbindung, umfassend das Aluminiumblech und das Kupferelement sowie das Kupferblech, gebildet werden kann, die elektrisch langzeitstabil ist, wobei eine Kriechneigung des Aluminiumblechs zuverlässig verhindert werden kann.

Weitere Vorteile, Merkmale und Einzelheiten der Erfindung können sich aus der nachfolgenden Beschreibung möglicher Ausführungsbeispiele sowie anhand der Zeichnung ergeben. Die vorstehend in der Beschreibung genannten Merkmale und Merkmalskombinationen sowie die nachfolgend in der Figurenbeschreibung und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

### Kurze Figurenbeschreibung

Die Zeichnung zeigt in:
- Fig. 1: eine schematische Abfolge von Verfahrensschritten zum Herstellen einer ersten Ausführungsform einer Stromschiene;
- Fig. 2: eine schematische Abfolge von Verfahrensschritten zur Herstellung einer zweiten Ausführungsform einer Stromschiene;
- Fig. 3: eine schematische Abfolge von Verfahrensschritten zum Herstellen einer dritten Ausführungsform einer Stromschiene.

In den Figuren sind gleiche oder funktionsgleiche Elemente mit den gleichen Bezugszeichen versehen.

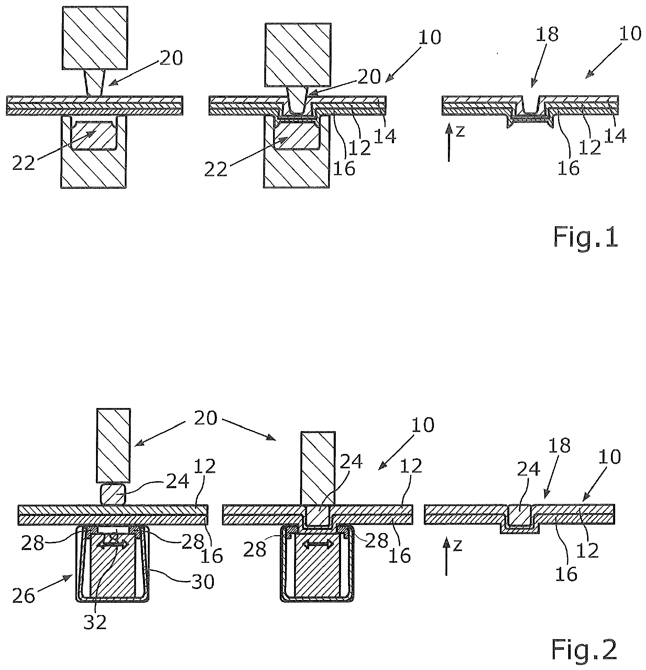

Eine Abfolge von Verfahrensschritten zum Herstellen einer ersten Ausführungsform einer Stromschiene 10 für ein Kraftfahrzeug ist in Fig. 1 gezeigt. Die Stromschiene 10 umfasst ein Aluminiumblech 12, das zwischen zwei Kupferblechen 14, 16 angeordnet ist. In einem Befestigungsbereich 18 der Stromschiene 10 ist das Aluminiumblech 12 bezogen auf die Hochrichtung z der Stromschiene 10 zwischen den beiden Kupferblechen 14, 16 angeordnet und in einer quer zur Hochrichtung z verlaufenden Ebene formschlüssig mittels der beiden Kupferbleche 14, 16 formschlüssig fixiert. Bei der hier gezeigten Ausführungsform ist das Aluminiumblech 12 also im Befestigungsbereich 18 mittels einer nietlosen Clinchverbindung mit den beiden Kupferblechen 14, 16 verbunden. Wie zu erkennen, bilden das Aluminiumblech 12 und die beiden Kupferbleche 14, 16 im Befestigungsbereich 18 gemeinsam eine Ausbuchtung mit einem im Wesentlichen u-förmigen Querschnitt. Die Stromschiene 10 ist eine Sandwichanordnung, die das zwischen den beiden Kupferblechen 14, 16 angeordnete Aluminiumblech 12 aufweist.

Zur Herstellung der Stromschiene 10 wird der dreilagige Aufbau aus dem Aluminiumblech 12 und den beiden Kupferblechen 14, 16 zwischen einem Stempel 20 und einer Matrize 22 angeordnet. Danach wird der Stempel 20 in Richtung der Matrize 22 bewegt, in Folge dessen die besage Clinchverbindung im Befestigungsbereich 18 hergestellt wird, wobei dadurch zudem der dreilagige Aufbau der Stromschiene 10 ausgebuchtet und umgeformt wird.

In Fig. 2 ist eine zweite mögliche Ausführungsform der Stromschiene 10 gezeigt, wobei jeweilige Herstellungsschritte zum Herstellen der zweiten Ausführungsform der Stromschiene 10 schematisch angedeutet sind. Im vorliegenden Fall umfasst die Stromschiene 10 einen Kupferniet 24, das Aluminiumblech 12 und das Kupferblech 16. Der Kupferniet 24 ist im Befestigungsbereich 18 der Stromschiene 10 angeordnet und fixiert das Aluminiumblech 12 durch eine Clinchnietverbindung mit dem Kupferblech 16. Wie zu erkennen, bilden das Aluminiumblech 12 und das Kupferblech 16 im Befestigungsbereich 18 gemeinsam eine Ausbuchtung mit einem im Wesentlichen u-förmigen Querschnitt, wobei innerhalb der hier nicht näher bezeichneten Ausbuchtung der Kupferniet 24 angeordnet ist.

Zum Herstellen der Stromschiene 10 werden zunächst das Aluminiumblech 12 und das Kupferblech 16 übereinander angeordnet und dann zwischen einem Stempel 20 und einem unteren Werkzeug 26 angeordnet. Danach wird der Stempel 20 in Richtung des unteren Werkzeugs 26 bewegt, in Folge dessen zwei Werkzeugelemente 28 unter Aufspreizung eines Federelements auseinanderbewegt werden. In Folge dessen wird das Aluminiumblech 12 mitsamt dem Kupferblech 16 in einen zwischen den Werkzeugelementen 28 vorhandenen Raum 32 bewegt, wobei der Kupferniet 24 unter Verformung des Aluminiumblechs 12 und des Kupferblechs 16 in diese hineingetrieben wird. Der Kupferniet 24 füllt somit im Befestigungsbereich 18 die so hergestellte Ausbuchtung aus und kann zuverlässig verhindert, dass das Aluminiumblech 12 quer zur Hochrichtung z kriechen kann.

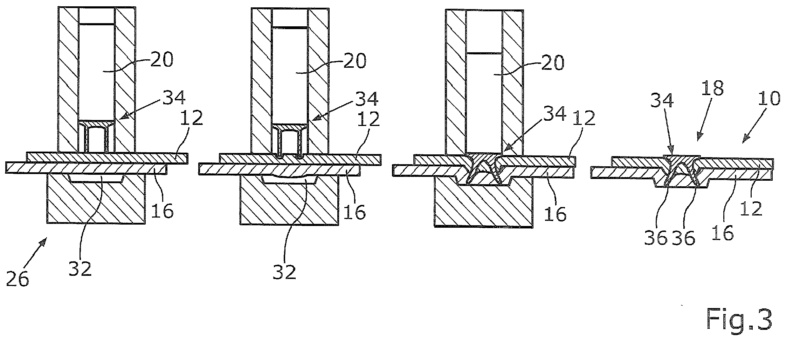

In Fig. 3 ist eine dritte Ausführungsform der Stromschiene 10 gezeigt, wobei wiederum mehrere Verfahrensschritte schematisch angedeutet sind, mittels welchen diese Ausführungsform der Stromschiene 10 hergestellt wird. Die Stromschiene 10 umfasst wiederum das Aluminiumblech 12 und das Kupferblech 16, wobei ein Kupferstanzkörper 34 das Aluminiumblech 12 vollständig und das Kupferblech 16 teilweise durchdringt und dadurch das Aluminiumblech 12 am Kupferblech 16 fixiert. Wie zu erkennen, weist der Kupferstanzkörper 34 zwei auseinandergespreizte Elemente 36 auf, die im Befestigungsbereich 18 das Aluminiumblech 12 vollständig und das Kupferblech 16 teilweise durchdringen. Das Aluminiumblech 12 und das Kupferblech 16 bilden im Befestigungsbereich 18 gemeinsam eine Ausbuchtung mit einem im Wesentlichen u-förmigen Querschnitt.

Zum Herstellen der Stromschiene 10 werden zunächst das Aluminiumblech 12 und das Kupferblech 16 übereinander angeordnet und dann zwischen einem Stempel 20 und einem unteren Werkzeug 26 angeordnet. Mittels des Stempels 20 wird dann der Kupferstanzkörper 34 durch das Aluminiumblech 12 und in das Kupferblech 16 hineingetrieben. Während der Abwärtsbewegung des Stempels 20 wird insbesondere das Kupferblech 16 in einen Raum 32 des unteren Werkzeugs 26 hineinverformt, in Folge dessen auch das Aluminiumblech 12 entsprechend u-förmig umgeformt wird. Durch die Bewegung des Stempels 20 schneidet der Kupferstanzkörper 34 durch das Aluminiumblech 12. Durch eine entsprechende Formgebung des unteren Werkzeugs 26 und des Kupferstanzkörpers 34 spreizen sich die Elemente 36 in das Kupferblech 16.

Bei sämtlichen erläuterten Herstellverfahren beziehungsweise Ausführungsformen der Stromschiene 10 wird also eine Dreifachverbindung aus dem jeweiligen Aluminiumblech 12, dem jeweiligen Kupferblech 16 und den Kupferelementen 24 beziehungsweise 34 hergestellt. In allen Fällen kann das Problem des Kriechens des Aluminiumblechs 12 durch das formschlüssige Fixieren durch die jeweiligen Kupferbleche 16 beziehungsweise Kupferelemente 24, 34 kompensiert beziehungsweise verhindert werden.

### BEZUGSZEICHENLISTE

- 10: Stromschiene
- 12: Aluminiumblech
- 14: Kupferblech
- 16: Kupferblech
- 18: Befestigungsbereich
- 20: Stempel
- 22: Matrize
- 24: Kupferelement in Form eines Kupferniets
- 26: unteres Werkzeug
- 28: Werkzeugelemente des unteren Werkzeugs
- 30: Federelement
- 32: Raum im unteren Werkzeug
- 34: Kupferelement in Form eines Kupferstanzkörpers
- 36: Elemente des Kupferstanzkörpers
- z: Hochrichtung der Stromschiene

## Patentansprüche

1. Stromschiene (10) für ein Kraftfahrzeug, umfassend ein Aluminiumblech (12), das mit einem Kupferelement und einem Kupferblech (16) verbunden ist, wobei zumindest in einem Befestigungsbereich (18) der Stromschiene (10) das Aluminiumblech (12) bezogen auf die Hochrichtung (z) der Stromschiene (10) zwischen dem Kupferelement und dem Kupferblech (16) angeordnet und zumindest in einer quer zur Hochrichtung (z) verlaufenden Richtung formschlüssig mittels des Kupferelements und/oder des Kupferblechs (16) fixiert ist.

2. Stromschiene (10) nach Anspruch 1,
**dadurch gekennzeichnet, dass**
das Kupferelement ein Kupferblech (14) ist, wobei das Aluminiumblech (12) im Befestigungsbereich (18) mittels einer Clinchverbindung mit den beiden Kupferblechen (14, 16) verbunden ist.

3. Stromschiene (10) nach Anspruch 2,
**dadurch gekennzeichnet, dass**
das Aluminiumblech (12) und die Kupferbleche (14, 16) im Befestigungsbereich (18) gemeinsam eine Ausbuchtung mit einem im Wesentlichen u-förmigen Querschnitt bilden.

4. Stromschiene (10) nach Anspruch 2 oder 3,
**dadurch gekennzeichnet, dass**
die Stromschiene (10) eine Sandwichanordnung ist, die das zwischen den beiden Kupferblechen (14, 16) angeordnete Aluminiumblech (12) aufweist.

5. Stromschiene (10) nach Anspruch 1,
**dadurch gekennzeichnet, dass**
das Kupferelement ein Kupferniet (24) ist, das im Befestigungsbereich (18) das Aluminiumblech (12) durch eine Clinchnietverbindung mit dem Kupferblech (16) fixiert.

6. Stromschiene (10) nach Anspruch 5,
**dadurch gekennzeichnet, dass**
das Aluminiumblech (12) und das Kupferblech (16) im Befestigungsbereich (18) gemeinsam eine Ausbuchtung mit einem im Wesentlichen u-förmigen Querschnitt bilden, in welcher der Kupferniet (24) angeordnet ist.

7. Stromschiene (10) nach Anspruch 1,
**dadurch gekennzeichnet, dass**
das Kupferelement ein Kupferstanzkörper (34) ist, der im Befestigungsbereich (18) das Aluminiumblech (12) vollständig und das Kupferblech (16) teilweise durchdringt und dadurch das Aluminiumblech (12) am Kupferblech (16) fixiert.

8. Stromschiene (10) nach Anspruch 7,
**dadurch gekennzeichnet, dass**
der Kupferstanzkörper (34) zwei auseinander gespreizte Elemente (36) aufweist, die im Befestigungsbereich (18) das Aluminiumblech (12) vollständig und das Kupferblech (16) teilweise durchdringen.

9. Verfahren zum Herstellen einer Stromschiene (10) für ein Kraftfahrzeug, bei welchem ein Aluminiumblech (12) mit einem Kupferelement und einem Kupferblech (16) verbunden wird, wobei zumindest in einem Befestigungsbereich(18) der Stromschiene (10) das Aluminiumblech (12) bezogen auf die Hochrichtung (z) der Stromschiene (10) zwischen dem Kupferelement und dem Kupferblech (16) angeordnet und zumindest in einer quer zur Hochrichtung (z) verlaufenden Richtung formschlüssig mittels des Kupferelements und/oder des Kupferblechs (16) fixiert wird.

10. Verfahren nach Anspruch 9,
**dadurch gekennzeichnet, dass**
- das Kupferelement ebenfalls ein Kupferblech(14) ist, wobei das zwischen den beiden Kupferblechen (14, 16) angeordnete Aluminiumblech (12) durch eine nietlose Clinchverbindung im Befestigungsbereich (18) mit den beiden Kupferblechen (14, 16) verbunden wird;
- oder das Kupferelement ein Kupferniet (24) ist, mittels welchem das Aluminiumblech (12) im Befestigungsbereich (18) durch eine Clienchnietverbindung an dem Kupferblech (16) fixiert wird;
- oder das Kupferelement ein Kupferstanzkörper (34) ist, der im Befestigungsbereich (18) durch Halbhohlstanznieten durch das Aluminiumblech (12) hindurch und in das Kupferblech (16) getrieben wird und dadurch das Aluminiumblech (12) am Kupferblech (16) fixiert wird.
